# EUROPÄISCHE PATENTSCHRIFT

(11) **EP 2 608 707 B1**
(45) Veröffentlichungstag und Bekanntmachung des Hinweises auf die Patenterteilung: **12.11.2014**
(21) Anmeldenummer: 11743824.2
(22) Anmeldetag: 11.08.2011
(51) Int. Cl.: A47J 43/046, A47J 43/07, A47J 43/044

(54) **KÜCHENGERÄT UND BEARBEITUNGSGEFÄSS MIT KUPPLUNGSVORRICHTUNG**
KITCHEN APPLIANCE AND PROCESSING CONTAINER HAVING A COUPLING DEVICE
USTENSILE DE CUISINE ET RÉCIPIENT DE PRÉPARATION AVEC DISPOSITIF D'ACCOUPLEMENT

(30) Priorität: 24.08.2010 DE 102010039718
(43) Veröffentlichungstag der Anmeldung: 03.07.2013
(73) Patentinhaber: BSH Bosch und Siemens Hausgeräte GmbH, 81739 München (DE)
(72) Erfinder: KOVACIC, Peter, 3303 Gomilsko (SI); BRECKO, Ales, 3000 Celje (SI); CATER, Matej, 3301 Petrovce (SI); BLAGOTINSEK, Andrej, 2380 Slovenj Gradec (SI); JEGRISNIK, Uros, 3313 Polzela (SI)
(86) Internationale Anmeldenummer: PCT/EP2011/063850
(87) Internationale Veröffentlichungsnummer: WO 2012/025394

(56) Entgegenhaltungen:
- EP-A1- 1 880 647
- WO-A1-2007/088320
- DE-A1- 3 308 780
- DE-A1- 3 803 814

## Beschreibung

### Gebiet der Erfindung

Die Erfindung betrifft ein Küchengerät mit einem Kupplungsteller für ein Bearbeitungsgefäß, wobei der Kupplungsteller an seinem Rand Kupplungsstellen einer Kupplungsvorrichtung zum lösbaren Ankuppeln des Bearbeitungsgefäßes aufweist. Weiter betrifft die Erfindung ein Bearbeitungsgefäß für ein Küchengerät, wobei ein Bodenteil des Bearbeitungsgefäßes an seinem Rand Gegenkupplungsstellen einer Gegenkupplungsvorrichtung zum lösbaren Befestigen an einem Kupplungsteller des Küchengeräts aufweist. Schließlich betrifft die Erfindung ein System, das das Küchengerät und das Bearbeitungsgefäß umfasst.

### Hintergrund der Erfindung

Aus dem Stand der Technik sind Küchenmaschinen bekannt, wie z.B. die Maschinen der Reihe MUM der Bosch und Siemens Hausgeräte GmbH, die einen Sockel mit einem Kupplungsteller aufweisen, an den eine Rührschüssel angekuppelt werden kann. Weiter weisen diese Maschinen einen elektrischen Motor auf, der ein Werkzeug, z.B. ein Knetwerkzeug oder einen Rührbesen, rotierend antreibt, der bei angekuppeltem Bearbeitungsgefäß in dieses Gefäß hineinragt, um in dem Gefäß vorgehaltene Speisen zu bearbeiten.

Weiter offenbart die internationale Patentanmeldung WO 2007/023117 A1 ein mit einer Kupplungsstelle für einen Mixbecher ausgestattetes Küchengerät, das mit einem Reed-Schalter an der Kupplungsstelle ausgestattet ist, der mit einem Magnet im Sockel des Mixbechers zusammenwirkt und die Stromzufuhr zu dem Antriebsmotor des Küchengeräts derart steuert, dass der Motor nur in Betrieb genommen werden kann, wenn der Mixbecher ordnungsgemäß an der Kupplungsstelle angekuppelt ist. Eine ähnliche Vorrichtung ist aus dem Europäischen Patent EP 1 921 957 B1 bekannt.

Auch die deutsche Offenlegungsschrift DE 31 21 252 A1 offenbart ein Mehrzweck-Haushaltsgerät mit mehreren austauschbaren Nahrungsmittel-Zubereitungswerkzeugen und einer abnehmbaren Schale. Das Haushaltsgerät umfasst eine magnetisch wirkende Sicherheitsblockierung, mit der eine ordnungsgemäße Positionierung der Schale in dem Haushaltsgerät überwacht wird. Funktionsfehler der magnetischen Sicherheitsblockierung werden vermieden, indem alternierende magnetische Flüsse verwendet werden.

Die internationale Patentanmeldung WO 2007/088320 A1 offenbart einen Standmixer mit einer Mixschüssel, die auf einem Podest befestigt wird. Der Inhalt der Mixschüssel kann erwärmt werden und verschiedene vorprogrammierte Zubereitungsprogramme, die ein Erwärmen und Durchmischen des Guts erlauben, können ausgeführt werden.

Die deutsche Offenlegungsschrift DE 33 08 780 A1 lehrt eine Küchenmaschine mit eingebauter Tellerwaage, deren Wiegeteller als Unterlage für einen Arbeitsbehälter dient. Im Betrieb kann der Arbeitsbehälter auf dem Wiegeteller umlaufen.
Die deutsche Offenlegungsschrift DE 38 03 814 A1 offenbart eine Küchenmaschine mit einer Schüssel, die in definierter Stellung zu einer Antriebseinheit festlegbar bzw festgelegt ist. Die Verwendung unterschiedlicher Schüsseln wird ermöglicht, indem die Antriebseinheit und die Schüssel auf einer gemeinsamen, ebenen und flachen Trageinheit mit als Bajonettverbindungen ausgebildeten Verbindungselementen versehen sind.

Schließlich offenbart die Europäische Patentanmeldung EP 1880 647 A1 einen Standmixer, dessen Teller zur Aufnahme einer Mixschüssel mit Gewichtssensoren ausgestattet ist, um das Gewicht der in der Schüssel vorliegenden Zutaten zu bestimmen.

### Der Erfindung zugrundeliegende Aufgabe

Der Erfindung liegt die Aufgabe zugrunde, ein verbessertes Küchengerät mit einem Kupplungsteller für ein Bearbeitungsgefäß bereitzustellen, bei dem der Kupplungsteller an seinem Rand Kupplungsstellen einer Kupplungsvorrichtung zum lösbaren Ankuppeln des Bearbeitungsgefäßes aufweist. Weiter soll ein verbessertes Bearbeitungsgefäß für ein Küchengerät, bereitgestellt werden, bei dem ein Bodenteil des Bearbeitungsgefäßes an seinem Rand Gegenkupplungsstellen einer Gegenkupplungsvorrichtung zum lösbaren Befestigen an einem Kupplungsteller des Küchengeräts aufweist. Das verbesserte Küchengerät und das verbesserte Bearbeitungsgerät sollen insbesondere einem falsch orientiertes ankuppeln des Bearbeitungsgefäßes an das Küchengerät vorbeugen. Die Lösung soll einfach und kostengünstig zu realisieren sein und eine einfache Handhabung für den Benutzer ermöglichen.

### Erfindungsgemäße Lösung

Zur Lösung der Aufgabe lehrt die vorliegende Erfindung ein Küchengerät mit einem Kupplungsteller für ein Bearbeitungsgefäß, wobei der Kupplungsteller an seinem Rand Kupplungsstellen einer Kupplungsvorrichtung zum lösbaren Ankuppeln des Bearbeitungsgefäßes aufweist. Der Kupplungsteller weist in seinem vom Rand eingeschlossenen Innenbereich entweder einen in Kupplungsrichtung vorstehenden Dorn, der in eine Nut im Bodenteil des Bearbeitungsgefäßes eingreifen kann, oder eine Nut, in die ein aus dem Bodenteil des Bearbeitungsgefäßes in Kupplungsrichtung hervorstehender Dorn eingreifen kann, auf.

Weiter wird die Aufgabe durch ein Bearbeitungsgefäß für ein Küchengerät gelöst, bei dem ein Bodenteil des Bearbeitungsgefäßes an seinem Rand Gegenkupplungsstellen einer Gegenkupplungsvorrichtung zum lösbaren Befestigen an einem Kupplungsteller des Küchengeräts aufweist. Der Bodenteil weist in seinem vom Rand eingeschlossenen Innenbereich eine Nut, in die ein aus dem Kupplungsteller des Küchengeräts in Kupplungsrichtung hervorstehender Dorn eingreifen kann, auf. Schließlich wird die Aufgabe durch ein System bestehend aus dem Küchengerät und dem Bearbeitungsgefäß gelöst.

Die Kupplungsvorrichtung des Küchengeräts und die Gegenkupplungsvorrichtung des Bearbeitungsgefäßes können nach Art eines Bajonettverschluss zusammenwirken. Entweder die Kupplung oder die Gegenkupplung weist dazu an jeder Kupplungsstelle einen radial von einer Kupplungsachse weg weisenden Kupplungszapfen auf. Die Kupplungszapfen hintergreifen in angekuppeltem Zustand eine Arretierkante der mit der Kupplungsstelle oder der Gegenkupplungsstelle korrespondierenden Gegenkupplungsstelle oder Kupplungsstelle. Dabei kann die Verbindung durch eine Steck-Drehbewegung erfolgen: Zunächst wird der Behälter in Kupplungsrichtung entlang der Kupplungsachse in den Kupplungsteller eingeführt, wobei der Zapfen in Kupplungsrichtung an der Arretierkante vorbeigeführt wird. Durch eine anschließende Drehbewegung um die Kupplungsachse gelangt der Zapfen unter die Arretierkante.

Die Kupplungsvorrichtung oder Gegenkupplungsvorrichtung kann aber z.B. auch Gewindeabschnitte als Kupplungsstellen und Gegenkupplungsstellen aufweisen. Die Verbindung kann in diesem Fall durch eine durch eine Schraubbewegung erfolgen, wobei die Gewindeabschnitte der Kupplungsstellen des Küchengeräts und die Gewindeabschnitte der Gegenkupplungsstellen des Bearbeitungsgefäßes in angekuppeltem Zustand gewindemäßig ineinander greifen:

Mit dem erfindungsgemäßen Dorn bzw. der erfindungsgemäßen Nut ist erreichbar, dass das Bearbeitungsgefäß nur in einer bestimmten Orientierung an den Kupplungsteller angekuppelt werden kann, nämlich in der Orientierung, in der der Dorn in die Nut eingreift. Dabei ist mit "Orientierung" eine Winkellage um die Kupplungsachse gemeint. Die Erfindung ist besonders dort vorteilhaft, wo die Kupplungseinrichtung aufgrund ihrer Symmetrie alleine mehrere Orientierungen des Bearbeitungsgefäßes zum Ankuppeln zuließe. Zum Beispiel sind bei einer symmetrisch ausgestalteten Bajonettkupplung mit drei Kupplungsstellen drei um jeweils 120° bezüglich der Kupplungsachse versetzte Orientierungen möglich. Durch den erfindungsgemäßen Dorn kann in Zusammenwirkung mit der erfindungsgemäßen Nut eine dieser Orientierungen als einzige Orientierung bestimmt werden, in der eine Kupplung möglich ist.

Dass das Bearbeitungsgefäß nur in einer bestimmten Orientierung angekuppelt werden kann, ist z.B. dann wünschenswert, wenn an dem Bearbeitungsgefäß an einer Stelle ein Betätigungselement angeordnet ist, das mit einem Detektionsmittel in dem Küchengerät zusammenwirkt, um ein angekuppeltes Bearbeitungsgefäß zu detektieren. Es kann in solchen Fällen durch die Erfindung vorteilhafterweise vermieden werden, dass das Betätigungsmittel oder das Detektionsmittel mehrfach vorgesehen werden müssen.

Die Erfindung eignet sich insbesondere für elektromotorische Küchengeräte, insbesondere elektromotorisch angetriebene Küchenmaschinen, z.B. Universalküchenmaschinen. Das Bearbeitungsgefäß ist z.B. eine Rührschüssel oder ein Mixbecher.

### Aufbau und Weiterbildung der erfindungsgemäßen Lösung

Vorteilhafte Aus- und Weiterbildungen, die einzeln oder in Kombination miteinander eingesetzt werden können, sind Gegenstand der abhängigen Ansprüche.

In einer bevorzugten Ausführung der Erfindung weist der Kupplungsteller in seinem vom Rand eingeschlossenen Innenbereich einen in Kupplungsrichtung vorstehenden Dorn auf. Der Dorn kann in eine Nut im Bodenteil-des Bearbeitungsgefäßes eingreifen. Dabei ist der Dorn exzentrisch angeordnet. Hierbei meint "exzentrisch" außerhalb des Zentrums des Kupplungstellers. Das Zentrum des Kupplungstellers liegt dort, wo die gedachte Kupplungsachse den Kupplungsteller durchstößt. Besonders vorzugsweise ist der Dorn bzw. die Nut im mittleren Drittel eines Radius vom Zentrum des Kupplungstellers zum Tellerrad angeordnet. Durch diese Ausführung der Erfindung wird vorteilhaft erreicht, dass die Position des Dorns bezüglich der Kupplungsachse nicht-symmetrisch ist und dadurch eine bestimmte Orientierung gegenüber den anderen Orientierungen auszeichnet. Vorzugsweise ist der Dorn in Kupplungsrichtung im Wesentlichen auf der Höhe der küchengeräteseitigen Verbindungsstelle der Kupplungsvorrichtung angeordnet.

Entsprechend ist auch, wenn der Bodenteil des Bearbeitungsgefäßes in seinem vom Rand eingeschlossenen Innenbereich einen in Kupplungsrichtung vorstehenden Dorn aufweist, der in eine Nut im Kupplungsteller des Küchengeräts eingreifen kann, dieser Dorn exzentrisch angeordnet, das heißt außerhalb des Zentrums des Bodenteils. Das Zentrum des Bodenteils liegt dort, wo die gedachte Kupplungsachse den Bodenteil durchstößt. Bei einem Bearbeitungsgefäß aus Stahl kann der Dorn in den Bodenteil geprägt sein.

In einer Ausführung der Erfindung ist der Kupplungsteller in seinem vom Rand eingeschlossenen Innenbereich mit einer Nut ausgestattet, in die ein aus dem Bodenteil des Bearbeitungsgefäßes in Kupplungsrichtung hervorstehender Dorn eingreifen kann, wobei die Nut sich entlang eines Abschnitts eines gedachten Kreises mit dem Zentrum des Kupplungstellers als Kreismittelpunkt erstreckt. Die Nut ist vorzugsweise hinsichtlich ihrer Länge und Lage im Kupplungsteller so ausgelegt, dass der Dorn beim Einsetzen des Bearbeitungsgefäßes in die Nut eingreift und beim Rotieren des Bearbeitungsgefäßes um die Kupplungsachse zum Zwecke des Ankuppelns in der Nut läuft. Vorzugsweise befindet sich der Dorn beim Einsetzen an einem Ende der Nut und bei angekoppeltem Gefäß am anderen Ende der Nut. Mit anderen Worten, die Nut ist in ihrer Länge gerade so gewählt, dass der Dorn während des Kupplungsvorganges in der Nut von ihrem einen zu ihrem anderen Ende läuft. Vorzugsweise befindet sich die Nut in einem mittleren Drittel eines Radius vom Zentrum des Kupplungstellers zum Rand des Kupplungstellers.

In einer bevorzugten Ausführung der Erfindung weist das Bodenteil in seinem vom Rand eingeschlossenen Innenbereich eine Nut auf, in die ein aus dem Kupplungsteller des Küchengeräts in Kupplungsrichtung hervorstehender Dorn eingreifen kann, wobei die Nut sich entlang eines Abschnitts eines gedachten Kreises mit dem Zentrum des Bodenteils als Kreismittelpunkt erstreckt. Die Nut ist hinsichtlich ihrer Länge und Lage im Bodenteil so ausgelegt, dass der Dorn beim Einsetzen des Bearbeitungsgefäßes in die Nut eingreift und beim Rotieren des Bearbeitungsgefäßes um die Kupplungsachse zum Zwecke des Ankuppelns in der Nut läuft. Vorzugsweise befindet sich der Dorn beim Einsetzen an einem Ende der Nut und bei angekoppeltem Gefäß am anderen Ende der Nut. Mit anderen Worten, die Nut ist in ihrer Länge gerade so gewählt, dass der Dorn während des Kupplungsvorganges von einem zum anderen Ende der Nut in dieser läuft. Vorzugsweise befindet sich die Nut in einem mittleren Drittel des Radius vom Zentrum des Bodenteils zum Rand des Bodenteils. Bei einem Bearbeitungsgefäß aus Stahl kann die Nut in den Bodenteil geprägt sein.

In einer bevorzugten Ausführung der Erfindung sind die Kupplungsstellen der Kupplungsvorrichtung rotationssymmetrisch um die Kupplungsachse angeordnet. Entsprechend sind auch die Gegenkupplungsstellen der Gegenkupplungsvorrichtung vorzugsweise rotationssymmetrisch um die Kupplungsachse angeordnet. Bei den Kupplungsstellen bzw. Gegenkupplungsstellen kann es sich z.B. um Kupplungsstellen eines Bajonettverschlusses handeln, also etwa Kupplungszapfen oder Arretierkanten. Es kann sich aber z.B. auch um Gewindeabschnitte handeln, die bei angekuppeltem Bearbeitungsgefäß gewindemäßig ineinander greifen. Verteilhaft kann eine symmetrische Anordnung der Kupplungsstellen bzw. Gegenkupplungsstellen einen besonders sicheren Halt des Bearbeitungsgefäßes in dem Kupplungsteller sicherstellen. Vorzugsweise umfasst die Kupplungsvorrichtung bzw. die Gegenkupplungsvorrichtung jeweils mindestens drei Kupplungsstellen.

Ein bevorzugtes Küchengerät ist mit einem Rastmittel ausgestattet, um das an das Küchengerät angekuppelte Bearbeitungsgefäß in seiner angekuppelten Stellung festzulegen. Das Bearbeitungsgefäß ist entsprechend vorzugsweise mit einem Gegenrastmittel ausgestattet. Das Rastmittel kann z.B. ein federgespannter Raststift sein. Vorzugsweise ist das Rastmittel so angeordnet und ausgebildet, dass es mit einer Gegenkupplungsstelle der Gegenkupplungsvorrichtung des Bearbeitungsgefäßes als Gegenrastmittel zusammenwirkt. Beispielsweise kann ein Kupplungszapfen einer Bajonettgegenkupplung einem Gewindeabschnitt einer Gewindegegenkupplung als Gegenrastmittel wirken. Vorzugsweise sind Rastmittel und Gegenrastmittel so ausgebildet, dass eine Einrastkraft, die beim Ankuppeln des Bearbeitungsgefäßes zum Einrasten zu überwinden ist, im Wesentlichen einer Entrastkraft, die beim Entkuppeln des Berbeitungsgefäßes zum Entrasten zu überwinden ist, entspricht.

Weiter weist ein bevorzugtes Küchengerät einen Detektor auf, um zu detektieren, ob das Bearbeitungsgefäß an das Küchengerät angekuppelt ist, vorzugsweise um zu detektieren, ob das Bearbeitungsgefäß in einer vorgesehenen Orientierung an das Küchengerät angekuppelt ist. Ein besonders bevorzugter Detektor ist ein elektrischer Schalter, der bei ordnungsgemäß angekuppeltem Bearbeitungsgefäß betätigt wird. Vorzugsweise wirkt der Schalter zur Betätigung mit einer Gegenkupplungsstelle der Kupplungsvorrichtung, z.B. einem Kupplungszapfen einer Bajonettgegenkupplung oder einem Gewindeabschnitt einer Gewindegegenkupplung, des Bearbeitungsgefäßes zusammen.

Ein geeigneter Schalter kann z.B. ein Magnetschalter sein. Dazu ist vorzugsweise am Bearbeitungsgefäß an einer Stelle, die bei ordnungsgemäß angekuppeltem Bearbeitungsgefäß dem Magnetschalter gegenüber liegt, ein Dauermagnet angeordnet, der auf den Magnetschalter wirkt. Der Magnetschalter ist z.B. ein mechanischer Schalter, dessen Betätigungselement aus Metall ausgebildet oder einen metallischen Teil aufweist. Dieser kann durch den Dauermagneten des Bearbeitungsgefäßes betätigt werden, wenn das Bearbeitungsgefäß sich in einer ordnungsgemäß angekuppelten Stellung befindet und dadurch den Schaltzustand des Schalters ändern, vorzugsweise ihn anschalten. Alternativ kann der Schalter z.B. auch als Reed-Schalter ausgebildet sein. Auch ein solcher Schalter lässt sich mit einem Dauermagneten des Bearbeitungsgefäßes betätigen. Sowohl der Magnetschalter als auch der Dauermagnet sind vorzugsweise in das Gehäuse des Küchengeräts bzw. des Bearbeitungsgefäßes rundum eingeschlossen. Dadurch können sie vor Verschmutzung und Beschädigung geschätzt werden.

### Kurzbeschreibung der Zeichnungen

Weitere vorteilhafte Ausgestaltungen werden nachfolgend an Hand von in den Zeichnungen dargestellten Ausführungsbeispielen, auf welche die Erfindung jedoch nicht beschränkt ist, näher beschrieben.

Es zeigen schematisch:
- Fig. 1: ein erfindungsgemäßes Küchengerät in einer perspektivischen Schrägansicht, seitlich von oben;
- Fig. 2: den Kupplungsteller eines erfindungsgemäßen Küchengeräts und ein erfindungsgemäßes Bearbeitungsgerät in perspektivischer Schrägansicht, seitlich von oben;
- Fig. 3: ein erfindungsgemäßes Bearbeitungsgefäß in perspektivischer Schrägansicht, seitlich von oben mit Blick auf den Bodenteil;
- Fig. 4: einen Ausschnitt des Bearbeitungsgefäßes aus Fig. 3 mit direkter Sicht von unten auf den Bodenteil des Bearbeitungsgefäßes;
- Fig. 5: eine Querschnittsansicht durch die Ebene der Kupplungsvorrichtung des Kupplungstellers der Fig. 2; und

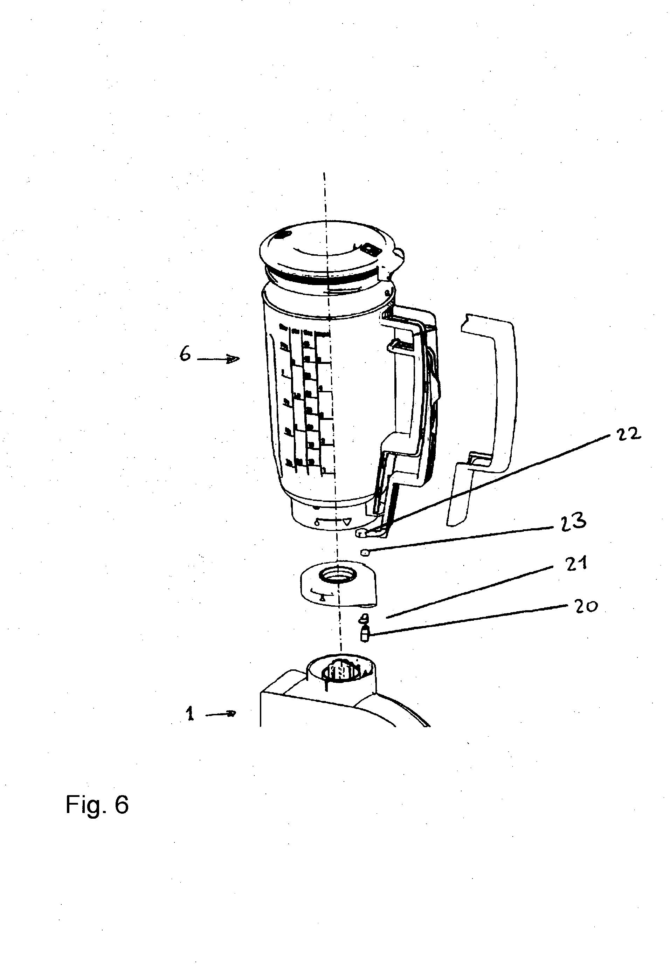

- Fig. 6: ein erfindungsgemäßes Küchengerät und einen erfindungsgemäßen Bearbeitungsbehälter in einer perspektivischen Explosionsansicht, seitlich von oben mit einem Magnetschalter als Detektor im Küchengerät und einem Dauermagneten im Bearbeitungsgefäß zum Betätigen des Magnetschalters.

### Ausführliche Beschreibung anhand von Ausführungsbeispielen

Bei der nachfolgenden Beschreibung bevorzugter Ausführungsformen der vorliegenden Erfindung bezeichnen gleiche Bezugszeichen gleiche oder vergleichbare Komponenten.

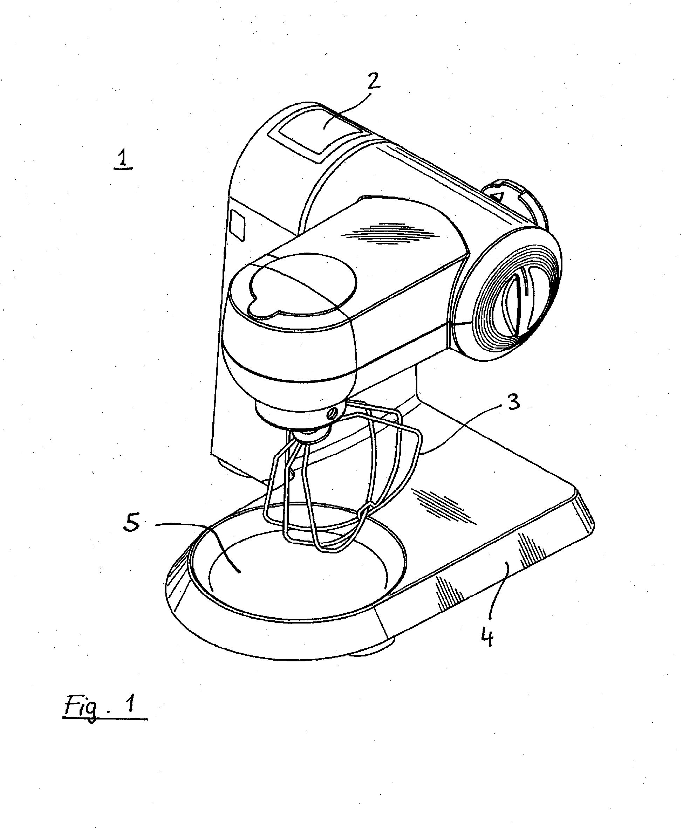

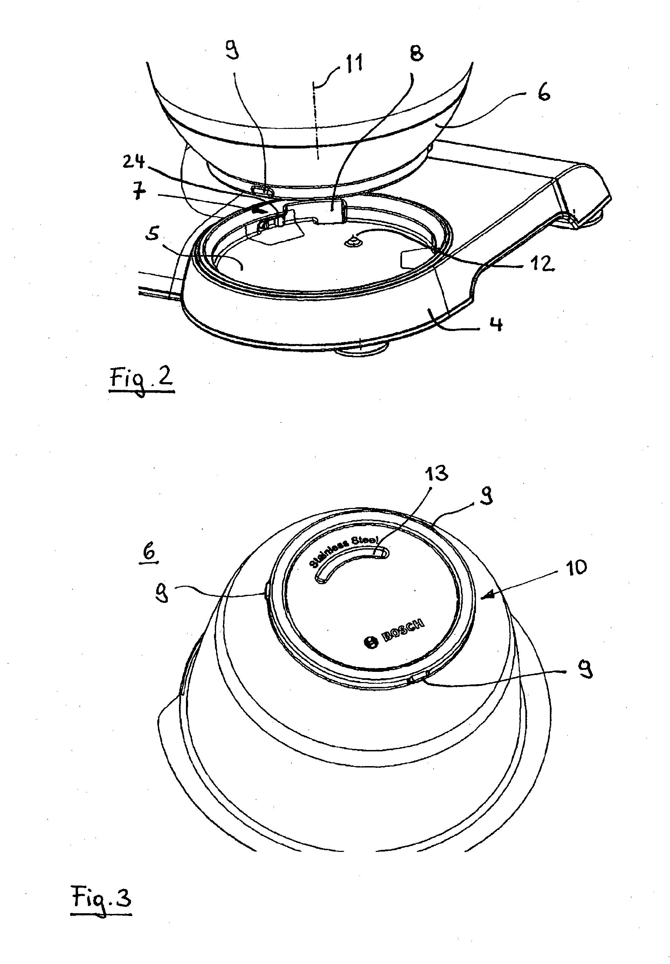

Fig. 1 zeigt eine Küchenmaschine 1 als Küchengerät mit einem Gehäuse, das einen Elektromotor (nicht dargestellt) einschließt, der mit einem EIN/AUS-Schalter 2 am Gehäuse ein- und ausgeschaltet werden kann. Der Elektromotor kann ein austauschbares Bearbeitungsgerät in Rotation versetzen. In der Figur ist als Bearbeitungsgerät beispielsweise ein Rührbesen 3 dargestellt. Der Sockel 4 der Küchenmaschine 1 ist mit einem Kupplungsteller 5 ausgestattet, an den ein Bearbeitungsgefäß, z.B. die in Fig. 2 und 3 dargestellte Rührschlüssel 6, fest aber wieder lösbar angekuppelt werden kann. Die Rührschüssel 6 kann dann mit Bearbeitungsgut, z.B. einer Teigmischung, befüllt werden, das dann von dem Bearbeitungswerkzeug 3 bearbeitet werden kann.

Der Kupplungsteller 5 ist in Fig. 2 genauer dargestellt. Er weist eine Bajonettkupplungsvorrichtung mit drei Kupplungsstellen 7 auf, von denen eine in der Figur sichtbar ist. Die Kupplungsstellen 7 weisen eine breite vertikale Nut 8 auf, in die ein korrespondierender Kupplungszapfen 9 eines Bodenteils 10 der Rührschüssel 6 von oben, also in Kupplungsrichtung entlang der Kupplungsachse 11, eingeführt werden kann, wenn die Rührschüssel 6 auf den Kupplungsteller 5 gesetzt wird. Anschließend können die Kupplungszapfen 9 durch Rotation der Rührschüssel 6 entgegen dem Uhrzeigersinn um die Kupplungsachse 11 unter eine Arretierkante 24 der jeweiligen Kupplungsstelle 7 geführt werden.

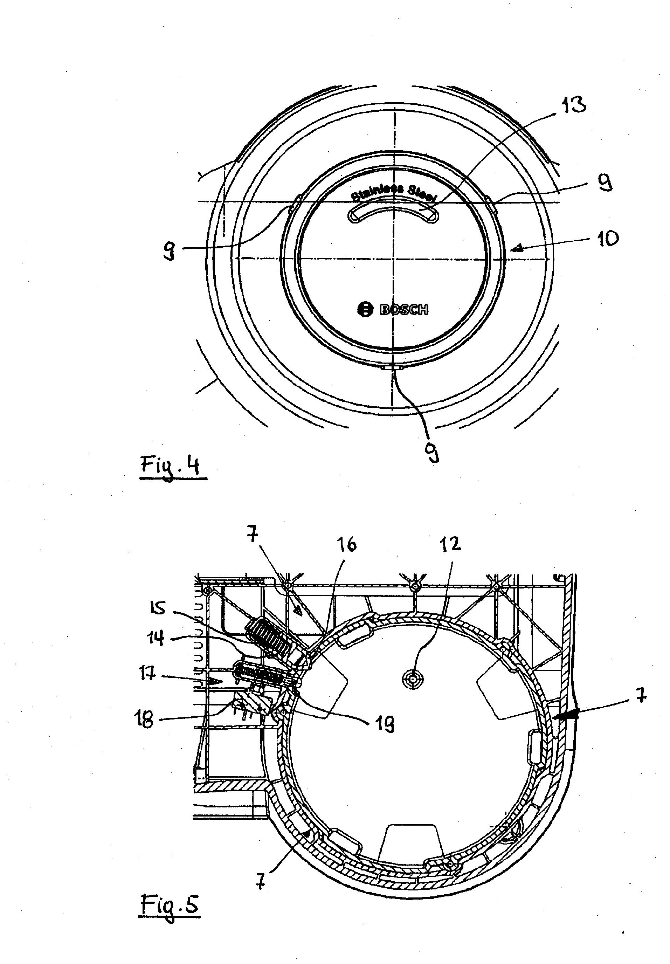

In Fig. 3 wird die Rührschüssel 6 mit Blick auf den Bodenteil 10 in perspektivischer Schrägansicht und in Fig. 4 mit Blick senkrecht auf den Bodenteil 10 dargestellt. Auf beiden Figuren gut zu erkennen sind die drei Kupplungszapfen 9 der Rührschüssel 6, die als Gegenkupplungsstellen mit den Kupplungsstellen der Küchenmaschine 1 zusammenwirkend einen Bajonettverschluss bilden. Sowohl die Kupplungsstellen 7 der Küchenmaschine als auch die korrespondierenden Gegenkupplungsstellen der Rührschüssel 6 sind rotationssymmetrisch am Rand des Kupplungstellers 5 bzw. des Bodenteils 10 angeordnet und um jeweils 120° voneinander beabstandet.

Wie am besten in Fig. 2 zu erkennen, weist der Kupplungsteller 5 in seinem vom Rand des Kupplungstellers 5 eingeschlossenen Innenbereich einen vorstehenden Dorn 12 auf, der in die in den Fig. 3 und 4 dargestellte korrespondierende Nut 13 des Bodenteils 10 der Rührschüssel 6 eingreifen kann, wenn die Rührschüssel 6 in der richtigen Orientierung, d.h. im gewünschten Drehwinkel bezüglich der Kupplungsachse 11, auf den Kupplungsteller 6 aufgesetzt wird. Der Dorn 12 befindet sich im Bereich des mittleren Drittels eines Radius vom Zentrum des Kupplungstellers 5, d.h. von dem Punkt, an dem die gedachte Kupplungsachse 11 den Kupplungsteller 5 durchstößt, und dem Rand des Kupplungstellers 10.

Entsprechend befindet sich auch die Nut 13 des Bodenteils 10 im mittleren Drittel seines Radius vom Zentrum des Bodenteils 10 zu dessen Rand, wobei das Zentrum des Bodenteils 10 wiederum der Punkt ist, in dem die Kupplungsache den Bodenteil 10 durchstößt. Die Nut 13 hat die Form des Abschnitts eines Kreises, dessen Mittelpunkt vom Zentrum des Bodenteils 10 gebildet wird. Die Nut 13 ist so platziert und ausgebildet, dass beim Einsetzen der Rührschüssel der Dorn an einem ersten Ende in die Nut 13 eingreift und die Nut 13 beim anschließenden Rotieren der Rührschüssel um die Kupplungsachse 11, bei dem der Kupplungszapfen 9 unter die Arretierkante 12 geführt wird, entlang der Nut 13 läuft, bis er in arretierter Stellung der Rührschüssel 6 am anderen Ende der Nut 13 zum Liegen kommt.

Wie insbesondere in Fig. 5 gut zu erkennen, ist die Küchenmaschine 1 im Bereich einer der Kupplungsstellen 7 mit einem stiftförmigen federgespannten Arretierstift 14 ausgestattet, der mit einer Schraubenfeder 15 in Richtung des Zentrums des Kupplungstellers 5 vorgespannt ist und mit einem Kupplungszapfen 9 der Rührschüssel 6 zusammenwirkt. Dazu ist der Stift 14 an seiner Spitze 16 kegelförmig ausgebildet, um eine Anlaufschräge darzustellen. Wenn der der Kupplungsstelle 7 zugeordnete Kupplungszapfen 9 der Rührschüssel 6 durch Drehen der Rührschüssel 6 um die Kupplungsachse 11 entgegen dem Urzeigersinn an dem Stift 14 vorbei in seine Endstellung läuft, wird dieser gegen die Federkraft verschoben und bewegt sich, nachdem der Kupplungszapfen 9 am Stift 14 vorbeigeführt ist, wieder Richtung Zentrum des Kupplungstellers 7 zurück. Dadurch rastet die Rührschüssel 6 in ihrer angekuppelten Stellung ein. Gleiches geschieht, wenn die Rührschüssel 6 durch Drehen der Rührschüssel 6 in entgegengesetzte Richtung, also im Uhrzeigersinn, um die Kupplungsachse 11 wieder aus dem Kupplungsteller 5 aus ihrer Raststellung gelöst wird. In jedem Fall muss der Kupplungszapfen 9 zum Überwinden des Stifts 14 aufgrund der Spannung der Feder 15 eine gewisse Kraft überwinden.

Außerdem ist eine der Kupplungsstellen 7 der Küchenmaschine 1 noch mit einem Detektor 17 ausgestattet, der einen elektrischen Schalter 18 mit einem ebenfalls mit einer Feder 20 in Richtung des Zentrums des Kupplungstellers 5 vorgespannten Taststift 19 aufweist. In angekuppelter Stellung betätigt der Kupplungszapfen 9 der Rührschüssel 6 den Taststift 19 des Detektors 17 in der Weise, dass der elektrische Schalter 18 in einen Zustand von nicht leitend zu leitend wechselt. Die Küchenmaschine 1 ist mit einer Steuerung (nicht dargestellt) ausgestattet, die auch bei eingeschaltetem EIN/AUS-Schalter 2 nur in diesem Fall ein Betätigen des elektrischen Motors zulässt. Hierdurch kann sichergestellt werden, dass die Küchenmaschine 1 nicht bei nicht oder falsch eingesetzter Rührschlüssel 6 in Betrieb genommen werden kann.

Schließlich zeigt Fig. 5 einen Mixer 1 als alternative Ausführung eines Küchengeräts sowie einen Mixbecher 9 als Bearbeitungsgefäß. Hier ist der Detektor 17 als Magnetschalter, vorzugsweise genauer als magnetisch betätigbarer elektrischer Mikroschalter 20 ausgebildet. Der Mikroschalter 20 weist einen Eisenmetallhebel 21 auf, der durch ein Magnetfeld betätigt werden kann. Der Mixbecher 9 ist an einer Stelle 22 mit einem Dauermagneten 23 ausgestattet, die bei ordnungsgemäßer Positionierung des Mixbechers 6 dem Hebel 21 des Mikroschalters 20 gegenüberliegt und ihn deshalb mit seiner Magnetkraft betätigt. Sowohl der Detektor als auch der Dauermagnet 23 sind im Inneren des Gehäuses des Mixers 1 bzw. des Mixbechers 6 angeordnet, um diese Teile vor Verschmutzung und Beschädigung zu schützen.

Das verbesserte Küchengerät und das verbesserte Bearbeitungsgerät können einem falsch orientierten Ankuppeln des Bearbeitungsgefäßes an das Küchengerät vorbeugen. Die Lösung kann einfach und kostengünstig realisiert werden und ermöglicht dem Benutzer eine einfache Handhabung.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein. Die Bezugszeichen in den Ansprüchen sollen lediglich deren Lesbarkeit verbessern und dürfen nicht als Einschränkung auf eine bestimmte Ausführungsform verstanden werden.

### Bezugszeichenliste

- 1: Küchenmaschine, Mixer
- 2: EIN/AUS-Schalter
- 3: Bearbeitungswerkzeug
- 4: Sockel
- 5: Kupplungsteller
- 6: Rührschüssel, Mixbecher
- 7: Kupplungsstelle
- 8: Vertikale Nut
- 9: Kupplungszapfen
- 10: Bodenteil
- 11: Kupplungsachse
- 12: Dorn
- 13: Nut
- 14: Arretierstift
- 15: Feder
- 16: Spitze des Arretierstifts
- 17: Detektor
- 18: Schalter
- 19: Taststift
- 20: Schalter
- 21: Hebel
- 22: Lage des Dauermagneten am Mixbecher
- 23: Dauermagnet
- 24: Arretierkante

## Patentansprüche

1. Küchengerät (1) mit einem Kupplungsteller (5) für ein Bearbeitungsgefäß (6), wobei der Kupplungsteller (5) an seinem Rand Kupplungsstellen (7) einer Kupplungsvorrichtung zum lösbaren Ankuppeln des Bearbeitungsgefäßes (6) aufweist, **dadurch gekennzeichnet, dass** der Kupplungsteller (5) in seinem vom Rand eingeschlossenen Innenbereich entweder einen in Kupplungsrichtung vorstehenden Dorn (12), der in eine Nut (13) im Bodenteil (10) des Bearbeitungsgefäßes (6) eingreifen kann, oder eine Nut (13), in die ein aus dem Bodenteil (10) des Bearbeitungsgefäßes (6) in Kupplungsrichtung hervorstehender Dorn (12) eingreifen kann, aufweist.

2. Küchengerät (1) nach Anspruch **1, dadurch gekennzeichnet, dass** der Kupplungsteller (5) in seinem vom Rand eingeschlossenen Innenbereich einen in Kupplungsrichtung vorstehenden Dorn (12) aufweist, der in eine Nut (13) im Bodenteil (10) des Bearbeitungsgefäßes (6) eingreifen kann, wobei der Dorn (12) exzentrisch angeordnet ist.

3. Küchengerät (1) nach Anspruch **1, dadurch gekennzeichnet, dass** der Kupplungsteller (5) in seinem vom Rand eingeschlossenen Innenbereich eine Nut (13) aufweist, in die ein aus dem Bodenteil (10) des Bearbeitungsgefäßes (6) in Kupplungsrichtung hervorstehender Dorn (12) eingreifen kann, wobei die Nut (13) sich entlang eines Abschnitts eines gedachten Kreises mit dem Zentrum des Kupplungstellers (5) als Kreismittelpunkt erstreckt.

4. Küchengerät (1) nach einem der vorherigen Ansprüche, **dadurch gekennzeichnet, dass** die Kupplungsstellen der Kupplungsvorrichtung rotationssymmetrisch um die Kupplungsachse (11) angeordnet sind.

5. Küchengeräts (1) nach einem der vorherigen Ansprüche, **dadurch gekennzeichnet, dass** das Küchengerät (1) mit einem Rastmittel (14) ausgestattet ist, um das an das Küchengerät (1) angekuppelte Bearbeitungsgefäß (6) in seiner angekuppelten Stellung festzulegen.

6. Küchengerät (1) nach Anspruch **4, dadurch gekennzeichnet, dass** das Rastmittel so angeordnet und ausgebildet, dass es mit einer Gegenkupplungsstelle (9) einer Bajonettgegenkupplung des Bearbeitungsgefäßes (6) als Gegenrastmittel zusammenwirkt.

7. Küchengerät (1) nach einem der vorherigen Ansprüche, **dadurch gekennzeichnet, dass** das Küchengerät (1) außerdem einen Detektor (17) aufweist, um zu detektieren, ob das Bearbeitungsgefäß (6) an das Küchengerät (1) angekuppelt ist.

8. Küchengerät (1) nach Anspruch 8, **dadurch gekennzeichnet, dass** der Detektor ein elektrischer Schalter (18, 20) ist.

9. Küchengerät (1) nach Anspruch 7, **dadurch gekennzeichnet, dass** der elektrische Schalter (20) magnetisch betätigbar ist.

10. Bearbeitungsgefäß (6) für ein Küchengerät (1), wobei ein Bodenteil (10) des Bearbeitungsgefäßes (6) an seinem Rand Gegenkupplungsstellen (9) einer Gegenkupplungsvorrichtung zum lösbaren Befestigen an einem Kupplungsteller (5) des Küchengeräts (1) aufweist, **dadurch gekennzeichnet, dass** der Bodenteil (10) in seinem vom Rand eingeschlossenen Innenbereich eine Nut (13), in die ein aus dem Kupplungsteller (5) des Küchengeräts (1) in Kupplungsrichtung hervorstehender Dorn (12) eingreifen kann, aufweist.

11. Bearbeitungsgefäß (6) nach Anspruch 9, **dadurch gekennzeichnet, dass** der Bodenteil (10) in seinem vom Rand eingeschlossenen Innenbereich eine Nut (13) aufweist, in die ein aus dem Kupplungsteller (5) des Küchengeräts (1) in Kupplungsrichtung hervorstehender Dorn (12) eingreifen kann, wobei die Nut (13) sich entlang eines Abschnitts eines gedachten Kreises mit dem Zentrum des Bodenteils (10) als Kreismittelpunkt erstreckt.

12. Bearbeitungsgefäß (6) nach einem der vorherigen Ansprüche 10 bis 11, **dadurch gekennzeichnet, dass** die Gegenkupplungsstellen (9) der Bajonettkupplung rotationssymmetrisch um die Kupplungsachse (11) angeordnet sind.

13. Küchengerät (1) mit einem Bearbeitungsgefäß (6), wobei das Küchengerät einen Kupplungsteller (5) aufweist, der an seinem Rand Kupplungsstellen (7) einer Kupplungsvorrichtung zum lösbaren Ankuppeln des Bearbeitungsgefäßes (6) aufweist, und ein Bodenteil (10) des Bearbeitungsgefäßes (6) an seinem Rand Gegenkupplungsstellen (9) einer Gegenkupplungsvorrichtung zum lösbaren Befestigen an dem Kupplungsteller (5) des Küchengeräts (1) aufweist, **dadurch gekennzeichnet, dass** der Kupplungsteller (5) in seinem vom Rand eingeschlossenen Innenbereich entweder einen in Kupplungsrichtung vorstehenden Dorn (12), der in eine Nut (13) im Bodenteil (10) des Bearbeitungsgefäßes (6) eingreifen kann, oder eine Nut (13), in die ein aus dem Bodenteil (10) des Bearbeitungsgefäßes (6) in Kupplungsrichtung hervorstehender Dorn (12) eingreifen kann, aufweist.

## Claims

1. Kitchen appliance (1) with a coupling plate (5) for a processing container (6), wherein the coupling plate (5) has coupling points (7) of a coupling device at its edge for removable coupling of the processing container (6), **characterised in that** the coupling plate (5) in its inner area enclosed by its edge, has either a pin (12) projecting in the coupling direction which can engage in a groove (13) in the base section (10) of the processing container (6) or a groove (13) into which a pin (12) projecting in the coupling direction from the base section (10) of the processing container (6) can engage.

2. Kitchen appliance (1) according to claim 1, **characterised in that** the coupling plate (5) in its inner area enclosed by its edge, has a pin (12) projecting in a coupling direction, which can engage in a groove (13) in the base section (10) of the processing container (6), wherein the pin (12) is disposed eccentrically.

3. Kitchen appliance (1) according to claim 1, **characterised in that** the coupling plate (5) in its inner area enclosed by its edge, has a groove (13), into which a pin (12) projecting from the base section (10) of the processing container (6) in the coupling direction can engage, wherein the groove (13) extends along a section of an imaginary circle with the centre of the coupling plate (5) as the centre point of the circle.

4. Kitchen appliance (1) according to one of the preceding claims, **characterised in that** the coupling points of the coupling device are disposed rotationally symmetrically around the coupling axis (11).

5. Kitchen appliance (1) according to one of the preceding claims, **characterised in that** the kitchen appliance (1) is equipped with a latching means (14) in order to fix the processing container (6) coupled to the kitchen appliance (1) in its coupled position.

6. Kitchen appliance (1) according to claim 4, **characterised in that** the latching means is disposed and embodied so that it interacts with a mating coupling point (9) of a bayonet mating connection of the processing container (6) as mating latching point.

7. Kitchen appliance (1) according to one of the preceding claims, **characterised in that** the kitchen appliance (1) also has a detector (17) to detect whether the processing container (6) is coupled to the kitchen appliance (1).

8. Kitchen appliance (1) according to claim 8, **characterised in that** the detector is an electrical switch (18, 20).

9. Kitchen appliance (1) according to claim 7, **characterised in that** the electrical switch (20) is able to be actuated magnetically.

10. Processing container (6) for a kitchen appliance (1), wherein a base section (10) of the processing container (6) has at its edge mating coupling points (9) of a mating coupling device for removable attachment to a coupling plate (5) of the kitchen appliance (1), **characterised in that** the base section (10), in its inner area enclosed by its edge, has a groove (13), into which a pin (12) projecting in the coupling direction from the coupling plate (5) of the kitchen appliance (1) can engage.

11. Processing container (6) according to claim 9, **characterised in that** the base section (10), in its inner area enclosed by its edge, has a groove (13), into which a pin (12) projecting in the coupling direction from the coupling plate (5) of the kitchen appliance (1) can engage, wherein the groove (13) extends along a section of an imaginary circle, with the centre of the base section (10) as the centre point of the circle.

12. Processing container (6) according to one of the preceding claims 10 to 11, **characterised in that** the mating coupling points (9) of the bayonet coupling are disposed rotationally symmetrically around the coupling axis (11).

13. Kitchen appliance (1) with a processing container (6), wherein the kitchen appliance has a coupling plate (5) that has coupling points (7) of a coupling device at its edge for removable coupling of the processing container (6), and a base section (10) of the processing container (6) has at its edge mating coupling points (9) of a mating coupling device for removable attachment to a coupling plate (5) of the kitchen appliance (1), **characterised in that** the coupling plate (5) in its inner area enclosed by its edge, has either a pin (12) projecting in the coupling direction which can engage in a groove (13) in the base section (10) of the processing container (6) or a groove (13) into which a pin (12) projecting in the coupling direction from the base section (10) of the processing container (6) can engage.

## Revendications

1. Robot de cuisine (1) comprenant un plateau d'accouplement (5) pour un récipient de préparation (6), le plateau d'accouplement (5) présentant sur son bord des emplacements de couplage (7) d'un dispositif d'accouplement pour le couplage amovible du récipient de préparation (6), **caractérisé en ce que** le plateau d'accouplement (5) présente dans sa zone intérieure enfermée par le bord soit un tourillon (12) en saillie dans le sens d'accouplement, lequel tourillon peut avoir prise dans une rainure (13) située dans la partie de fond (10) du récipient de préparation (6), soit une rainure (13), dans laquelle peut avoir prise un tourillon (12) en saillie de la partie de fond (10) du récipient de préparation (6) dans le sens d'accouplement.

2. Robot de cuisine (1) selon la revendication 1, **caractérisé en ce que** le plateau d'accouplement (5) présente dans sa zone intérieure enfermée par le bord un tourillon (12) en saillie dans le sens d'accouplement, lequel tourillon peut avoir prise dans une rainure (13) située dans la partie de fond (10) du récipient de préparation (6), le tourillon (12) étant disposé de manière excentrique.

3. Robot de cuisine (1) selon la revendication 1, **caractérisé en ce que** le plateau d'accouplement (5) présente dans sa zone intérieure enfermée par le bord une rainure (13), dans laquelle peut avoir prise un tourillon (12) en saillie de la partie de fond (10) du récipient de préparation (6) dans le sens d'accouplement, la rainure (13) s'étendant le long d'une section d'un cercle imaginaire avec le centre du plateau d'accouplement (5) en tant que centre de cercle.

4. Robot de cuisine (1) selon l'une quelconque des revendications précédentes, **caractérisé en ce que** les emplacements de couplage du dispositif d'accouplement sont disposés en symétrie de rotation autour de l'axe d'accouplement (11).

5. Robot de cuisine (1) selon l'une quelconque des revendications précédentes, **caractérisé en ce que** le robot de cuisine (1) est équipé d'un moyen d'encliquetage (14) afin de fixer le récipient de préparation (6) accouplé au robot de cuisine (1) dans sa position couplée.

6. Robot de cuisine (1) selon la revendication 4, **caractérisé en ce que** le moyen d'encliquetage est disposé et réalisé de manière à ce qu'il coopère en tant que moyen de contre-encliquetage avec un emplacement de contre-accouplement (9) d'un accouplement à baïonnette du récipient de préparation (6).

7. Robot de cuisine (1) selon l'une quelconque des revendications précédentes, **caractérisé en ce que** le robot de cuisine (1) présente en outre un détecteur (17) afin de détecter si le récipient de préparation (6) est couplé au robot de cuisine (1).

8. Robot de cuisine (1) selon la revendication 7, **caractérisé en ce que** le détecteur est un commutateur électrique (18, 20).

9. Robot de cuisine (1) selon la revendication 7, **caractérisé en ce que** le commutateur électrique (20) est commandable magnétiquement.

10. Récipient de préparation (6) pour un robot de cuisine (1), une partie de fond (10) du récipient de préparation (6) présentant sur son bord des emplacements de contre-accouplement (9) d'un dispositif de contre-accouplement pour la fixation amovible sur un plateau d'accouplement (5) du robot de cuisine (1), **caractérisé en ce que** la partie de fond (10) présente une rainure (13) dans sa zone intérieure enfermée par le bord, dans laquelle rainure peut avoir prise un tourillon (12) en saillie du plateau d'accouplement (5) du robot de cuisine (1) dans le sens d'accouplement.

11. Récipient de préparation (6) selon la revendication 9, **caractérisé en ce que** la partie de fond (10) présente une rainure (13) dans sa zone intérieure enfermée par le bord, dans laquelle rainure peut avoir prise un tourillon (12) en saillie du plateau d'accouplement (5) du robot de cuisine (1) dans le sens d'accouplement, la rainure (13) s'étendant le long d'une section d'un cercle imaginaire avec le centre du plateau d'accouplement (5) en tant que centre de cercle.

12. Récipient de préparation (6) selon l'une quelconque des revendications 10 à 11, **caractérisé en ce que** les emplacements de contre-accouplement (9) de l'accouplement par baïonnette sont disposés en symétrie de rotation autour de l'axe d'accouplement (11).

13. Robot de cuisine (1) comprenant un récipient de préparation (6), le robot de cuisine présentant un plateau d'accouplement (5) qui sur son bord présente des emplacements de couplage (7) d'un dispositif d'accouplement pour le couplage amovible du récipient de préparation (6), et une partie de fond (10) du récipient de préparation (6) présentant sur son bord des emplacements de contre-accouplement (9) d'un dispositif de contre-accouplement pour la fixation amovible sur le plateau d'accouplement (5) du robot de cuisine (1), **caractérisé en ce que** le plateau d'accouplement (5) présente dans sa zone intérieure enfermée par le bord soit un tourillon (12) en saillie dans le sens d'accouplement, lequel tourillon peut avoir prise dans une rainure (13) située dans la partie de fond (10) du récipient de préparation (6), soit une rainure (13), dans laquelle peut avoir prise un tourillon (12) en saillie de la partie de fond (10) du récipient de préparation (6) dans le sens d'accouplement.
